# FASCICULE DE BREVET EUROPEEN

(11) **EP 0 857 735 B1**
(45) Date de publication et mention de la délivrance du brevet: **21.01.2004**
(21) Numéro de dépôt: 98201013.4
(22) Date de dépôt: 01.06.1993
(51) Int. Cl.: C08F 4/646, C08F 10/00

(54) **Procédé de préparation d'un système catalytique et procédé de (co)polymérisation d'oléfines**
Verfahren zur Herstellung eines katalytischen Systems und Verfahren zur Olefin(co)polymerisation
Process for producing a catalyst system and process for the (co) polymerization of olefins

(30) Priorité: 05.06.1992 BE 9200526
(43) Date de publication de la demande: 12.08.1998
(62) Demande divisionnaire de: 93201560.5
(73) Titulaire: SOLVAY POLYOLEFINS EUROPE - BELGIUM (Société Anonyme), 1050 Bruxelles (BE)
(72) Inventeur: Zandona, Nicola, 1410 Waterloo (BE)
(74) Mandataire: Smith, Julian Philip Howard

(56) Documents cités:
- WO-A-92/01723
- KAZUO SOGA ET AL: "POLYMERIZATION OF OLEFINS WITH THE CATALYST SYSTEM (RCP)TICL3 (R = H, CH3)/SIO2-COMMON ALKYLALUMINIUM ACTIVATED WITH A SUITABLE LEWIS ACID" MAKROMOLEKULARE CHEMIE, MACROMOLECULAR CHEMISTRY AND PHYSICS,CH,HUTHIG UND WEPF VERLAG, BASEL, vol. 193, no. 7, 1 juillet 1992 (1992-07-01), pages 1687-1694, XP000282074 ISSN: 0025-116X

## Description

La présente invention concerne un procédé de préparation d'un système catalytique ionique, au départ d'un métallocène neutre dérivé d'un métal de transition éventuellement supporté par exemple sur de la silice, d'un composé organoaluminique et d'un agent ionisant. L'invention concerne également un procédé de (co)polymérisation d'oléfines, typiquement de l'éthylène et du propylène.

La demande de brevet EP=426638 (FINA TECHNOLOGY INC.) divulgue un procédé de polymérisation d'oléfines selon lequel, dans une première étape, on mélange l'oléfine avec un composé alkylaluminique et, dans une deuxième étape, on y ajoute un catalyseur. Selon ce procédé connu, le catalyseur est obtenu en mélangeant un agent ionisant tel que le tétrakis(pentafluorophényl)borate de triphénylcarbénium avec un métallocène neutre dérivé d'un métal de transition et sélectionné parmi les dérivés du cyclopentadiène, de l'indène et du fluorène. Bien que les métallocènes halogénés soient cités, seuls les métallocènes diméthylés, non halogénés sont explicités dans les exemples.

Les métallocènes polyméthylés, non halogénés sont généralement des produits instables obtenus par une synthèse laborieuse. On a par ailleurs observé que des catalyseurs fabriqués au départ de métallocènes polyméthylés, non halogénés sont particulièrement instables et présentent, lors de leur utilisation pour la polymérisation d'oléfines, une activité qui décroît rapidement dès le moment de leur préparation. Ce comportement rend ces catalyseurs peu reproductibles et dès lors inefficaces à la polymérisation d'oléfines.

L'invention remédie aux désavantages du procédé connu décrit ci-dessus, en fournissant un procédé nouveau, qui permet l'obtention de systèmes catalytiques ioniques préparés au départ de métallocènes (supportés), évitant l'emploi de métallocènes polyméthylés, non halogénés, instables et contournant ainsi leur synthèse laborieuse. Un autre objectif de l'invention est de fournir des systèmes catalytiques préparés in situ dans le réacteur de polymérisation, simplifiant ainsi le procédé de polymérisation en éliminant l'étape antérieure de la génération du métallocène ionique.

En conséquence, l'invention concerne un procédé de préparation d'un système catalytique selon lequel on met en oeuvre au moins un composé organoaluminique de formule générale AlT'TT", dans laquelle T, T' et T" désignent chacun un radical hydrocarboné pouvant éventuellement comprendre de l'oxygène, au moins un métallocène neutre dérivé d'un métal de transition et au moins un agent ionisant; selon l'invention, le métallocène neutre est sélectionné parmi les composés de formule (Cₚ)ₐ(Cₚ')_{b}MXₓ, dans laquelle :
- Cₚ désigne un radical cyclopentadiényle, indényle ou fluorényle ou un dérivé substitué de ce radical,
- Cₚ' désigne un radical cyclopentadiényle, indényle ou fluorényle ou un dérivé substitué de ce radical,
ou un radical dérivé d'un élément choisi parmi les groupes VA et VIA du tableau périodique, les groupes Cₚ et Cₚ' pouvant être liés par un pont covalent
- M désigne un métal de transition choisi parmi les groupes IIIB, IVB, VB et VIB du tableau périodique
- a, b et x désignent des nombres entiers tels que
   (a + b + x) = m, x ≥ 1 et a et/ou b ≠ 0
- m désigne la valence du métal de transition M
- X désigne un halogène, le métallocène neutre étant déposé sur un support minéral
et on prépare, dans une première étape, un mélange du composé organoaluminique et du métallocène neutre ainsi supporté dans au moins un diluant hydrocarboné et on y ajoute, dans une deuxième étape, l'agent ionisant.

Dans le procédé selon l'invention les composés organoaluminiques de formule générale AlTT'T" peuvent être choisis parmi les trialkylaluminium tels que le tributyl-, le triméthyl-, le triéthyl-, le tripropyl-, le triisopropyl-, le triisobutyl-, le trihexyl-, le trioctyl- et le tridodécylaluminium. Les composés organoaluminiques préférés sont ceux dont les radicaux hydrocarbonés sont choisis parmi les groupes alkyle, alkényle, aryle et alkoxy éventuellement substitués, contenant jusqu'à 20 atomes de carbone. Les composés organoaluminiques les plus avantageux sont le triéthylaluminium et le triisobutylaluminium.

Les composés de formule (Cₚ)ₐ (Cₚ')_{b} MXₓ utilisés dans le procédé de préparation selon l'invention sont avantageusement ceux dont le métal de transition est sélectionné parmi le scandium, le titane, le zirconium, l'hafnium et le vanadium. Le zirconium convient particulièrement bien. Les groupes Cₚ et Cₚ' représentent chacun un radical cyclopentadiényle, indényle ou fluorényle ou un dérivé substitué de ce radical. Les radicaux substitués préférés sont ceux dans lesquels au moins un atome d'hydrogène est substitué par un radical hydrocarboné comprenant jusqu'à 10 atomes de carbone. II peut également s'agir d'un radical dérivé d'un élément choisi parmi les groupes VA et VIA du tableau périodique, par exemple l'azote.

Dans le procédé de préparation selon l'invention les dérivés organiques neutres de formule (Cₚ)ₐ(Cₚ')_{b}MXₓ peuvent par exemple être choisis parmi les métallocènes de scandium mono- et dihalogénés tels que le chlorodi-(cyclopentadiényl)scandium et le dichloro(indényl)scandium, les métallocènes de titane mono-, di- et trihalogénés tels que le chlorotri(pentaméthylcyclopentadiényl)titane, le dibromodi(méthylcyclopentadiényl)titane et le trichloro(cyclopentadiényl)titane, les métallocènes de zirconium mono-, di- et trihalogénés tels que le iodotri(cyclopentadiényl)zirconium, le dibromo(cyclopentadiényl-indényl)zirconium, le trichloro(fluorényl)zirconium, les métallocènes d'hafnium mono-, di- et trihalogénés, les métallocènes de vanadium mono-, di- et trihalogénés tels que le chlorotri(cyclopentadiényl)vanadium, le dichlorodi(éthylcyclopentadiényl)vanadium et le trichloro(éthylindényl)vanadium, les métallocènes de chrome trivalents mono- et dihalogénés tels que le dichloro(cyclopentadiényl)chrome.

Les métallocènes ayant un pont covalent reliant les deux groupes Cₚ et Cₚ' peuvent être choisis parmi ceux de formule générale : 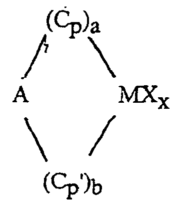 dans laquelle A représenté un groupe alkylène pouvant éventuellement comprendre de l'oxygène, alkénylène, arylalkylène, alkylarylène, arylalkénylène, éventuellement halogéné ou un radical dérivé d'un élément choisi parmi les groupes IIIA, IVA, VA et VIA du tableau périodique, tel que le bore, l'aluminium, le silicium, le germanium, l'étain, l'azote, le phosphore et lé soufre. On peut citer comme exemples de métallocènes pontés, ceux répondant aux formules : 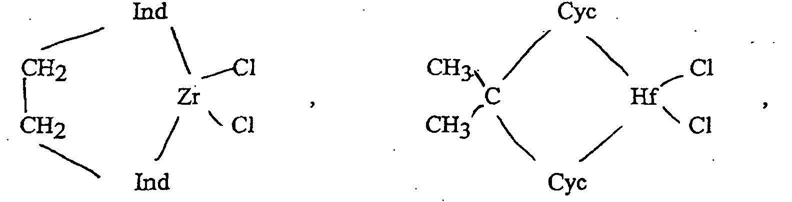 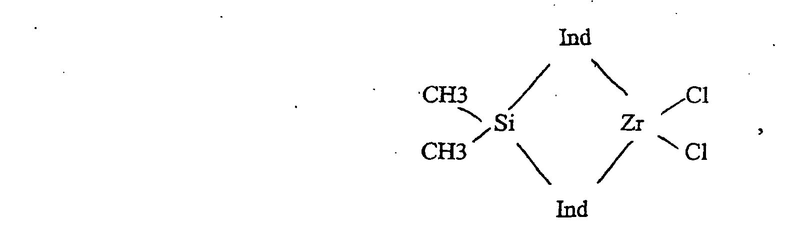 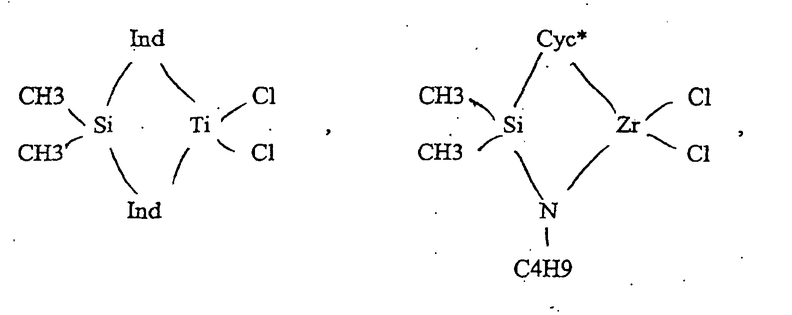 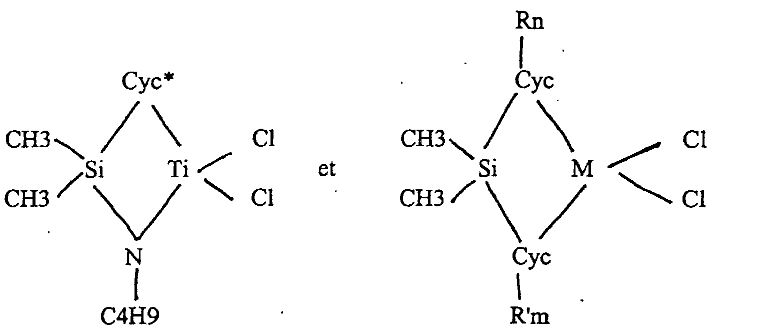 dans lesquelles Ind représente le radical indényle, Cyc représente le radical cyclopentadiényle, Cyc* représente le radical pentaméthylcyclopentadiényle, R et R' représentent un groupement alkyle, n et m représentent un nombre de 1 à 5, et M représente le titane, le zirconium ou l'hafnium.

Les métallocènes de formule (Cₚ)ₐ(Cₚ')_{b}MXₓ préférés sont ceux dans lesquels Cₚ et Cₚ' sont choisis parmi les radicaux cyclopentadiényle, indényle et fluorényle. De bons résultats sont obtenus avec ceux dont les groupes Cₚ et Cₚ' sont liés par un pont covalent du type alkyle. Les métallocènes dont le métal de transition est choisi parmi le titane, le zirconium et l'hafnium conviennent très bien. On obtient des résultats particulièrement satisfaisants avec les métallocènes dérivés du zirconium.

Dans le procédé selon l'invention on entend désigner par agent ionisant, un composé comprenant une première partie qui présente les propriétés d'un acide de Lewis et qui est capable d'ioniser le métallocène neutre et une deuxième partie, qui est inerte vis-à-vis du métallocène ionisé et qui est capable de stabiliser le métallocène ionisé. L'agent ionisant peut être un composé ionique comprenant un cation présentant les propriétés d'un acide de Lewis et un anion constituant la deuxième partie précitée de l'agent ionisant. Les anions ayant conduit à de très bons résultats sont les organoborates. On entend désigner par organoborate un dérivé du bore, dans lequel l'atome de bore est lié à 4 substituants organiques. On peut citer comme exemples d'agents ionisants ioniques, le tétrakis(pentafluorophényl)borate de triphénylcarbénium, le tétrakis-(pentafluorophényl)borate de N,N-diméthylanilinium et le tétrakis-(pentafluorophényl)borate de tri(n-butyl)ammonium. Les acides de Lewis cationiques préférés sont le carbénium, le sulfonium et l'oxonium.

En variante, l'agent ionisant peut également être un composé nonionique, présentant les propriétés d'un acide de Lewis qui est capable de transformer le métallocène neutre en métallocène cationique. A cet effet, l'agent ionisant est lui-même transformé en un anion inerte vis-à-vis du métallocène cationique qui est capable de stabiliser celui-ci. On peut citer comme exemple d'agent ionisant nonionique, le tri(pentafluorophényl)bore, le triphénylbore, le triméthylbore, le tri(triméthylsilyl)bore et les organoboroxines.

L'agent ionisant est de préférence sélectionné parmi le tétrakis(pentafluorophényl)borate de triphénylcarbénium et le tri(pentafluorophényl)bore.

La première étape du procédé de préparation suivant l'invention consiste à préparer un mélange du composé organoaluminique et du métallocène neutre dans au moins un diluant hydrocarboné afin de substituer au moins un des halogènes du métallocène neutre par un radical hydrocarboné. Le diluant hydrocarboné utilisé dans cette étape peut être choisi parmi les hydrocarbures aliphatiques tels que les alcanes linéaires (par exemple le n-butane, le n-hexane et le n-heptane), les alcanes ramifiés (par exemple l'isobutane, l'isopentane, l'isooctane et le 2,2-diméthylpropane), les cycloalcanes (par exemple le cyclopentane et le cyclohexane), parmi les hydrocarbures aromatiques monocycliques tels que le benzène et ses dérivés, par exemple le toluène et parmi les hydrocarbures aromatiques polycycliques, chaque cycle pouvant être substitué. On peut bien entendu utiliser simultanément plusieurs diluants hydrocarbonés. Le toluène convient bien.

Les quantités respectives du composé organoaluminique et du métallocène neutre dépendent du choix de ces composés. En pratique, on a intérêt à utiliser le composé organoaluminique en une quantité suffisante pour substituer la totalité des atomes d'halogènes du métallocène neutre. Il peut être avantageux d'utiliser des quantités supérieures du composé organoaluminique pour bénéficier de ses propriétés de capteur d'impuretés au cours de la fabrication du système catalytique. A cet effet, on recommande par exemple que le rapport molaire du composé organoaluminique au métallocène neutre soit au moins égal à 10. Afin de bénéficier également des propriétés précitées du composé organoaluminique au cours de l'utilisation du système catalytique dans un procédé de polymérisation d'oléfine, on recommande que le rapport molaire du composé organoaluminique au métallocène neutre soit au moins égal à 100, par exemple environ 1000.

Dans cette première étape du procédé de préparation selon l'invention le mélange est préparé à une température pouvant varier de la température ambiante à la température d'ébullition du composé le plus volatile du mélange à la pression de travail, tout en restant en dessous de la température de décomposition thermique des composants du mélange. La température dépend dès lors de la nature des composants du mélange et est généralement supérieure à 15 °C, de préférence au moins égale à 20 °C. Elle est habituellement au maximum égale à 80 °C, de préférence inférieure à 70 °C. La température ambiante convient particulièrement bien.

La durée de cette première étape doit être suffisante pour permettre une réaction complète du métallocène avec le composé organoaluminique. Elle peut varier de quelques secondes à plusieurs heures. En pratique, on n'a pas intérêt à postposer la deuxième étape, la réaction à la première étape étant en général instantanée. Le mélange peut être agité pendant toute la durée de la première étape ou pendant une partie de celle-ci.

Le mélange préparé au cours de la première étape du procédé selon l'invention, peut comprendre plus qu'un composé organoaluminique et plus qu'un métallocène neutre.

Dans la deuxième étape du procédé selon l'invention, on ajoute au mélange obtenu dans la première étape précitée, l'agent ionisant.

Dans la deuxième étape du procédé selon l'invention, l'agent ionisant doit de préférence être mis en oeuvre en une quantité suffisante pour ioniser le métallocène. La quantité d'agent ionisant à mettre en oeuvre va dès lors dépendre du métallocène neutre et de l'agent ionisant sélectionnés. En général, on peut utiliser une quantité d'agent ionisant telle que le rapport molaire de l'agent ionisant au métallocène neutre mis en oeuvre à la première étape précitée soit au moins égale à 0,1, en particulier au moins égale à 0,5, les valeurs inférieures à 10 étant préférées, celles inférieures à 2 étant recommandées.

Cette seconde étape du procédé selon l'invention peut être effectuée à toute température inférieure à la température d'ébullition du composé le plus volatile du milieu réactionnel à la pression de travail. Par milieu réactionnel on entend désigner le milieu obtenu après l'ajout de l'agent ionisant lors de la deuxième étape du procédé suivant l'invention. La température est généralement supérieure à - 50 °C, de préférence au moins égale à 0 °C; elle est habituellement inférieure à 100 °C, de préférence au maximum égale à 80 °C. La température ambiante convient particulièrement bien.

La durée de cette seconde étape doit être suffisante pour permettre une ionisation complète du produit de la réaction entre le métallocène neutre et le composé organoaluminique obtenu à la première étape précitée. Elle peut varier de quelques secondes à plusieurs heures. La réaction étant généralement instantanée, les durées variant de 0,5 à 30 minutes sont les plus courantes. Le milieu réactionnel peut être agité pendant toute la durée de la deuxième étape ou pendant une partie de celle-ci.

Dans cette deuxième étape du procédé suivant l'invention, on peut ajouter au mélange issu de la première étape plus qu'un agent ionisant.

Dans une première forme d'exécution du procédé selon l'invention que l'on préfère, le métallocène neutre est mis en oeuvre sous la forme d'une solution. A cet effet, on le dissout au préalable dans un hydrocarbure aromatique, de préférence le toluène. Dans cette variante le choix du diluant hydrocarboné utilisé dans la première étape du procédé selon l'invention est indépendant de la nature du métallocène neutre. Dès lors, on peut utiliser comme diluant hydrocarboné les hydrocarbures aromatiques et aliphatiques cités plus haut. Les diluants hydrocarbonés préférés sont les hydrocarbures aromatiques. Le toluène convient bien.

Une deuxième forme d'exécution du procédé suivant l'invention consiste à mettre l'agent ionisant en oeuvre sous forme solide. Dans cette deuxième forme d'exécution, le choix du diluant hydrocarboné utilisé lors de la première étape doit être tel que l'agent ionisant y soit soluble. Les diluants hydrocarbonés capables de dissoudre l'agent ionisant peuvent être sélectionnés parmi les hydrocarbures aromatiques tels que le toluène et les hydrocarbures aliphatiques halogénés tels que le chlorure de méthylène et le chloroforme. Le toluène convient bien. Dans cette forme d'exécution, la quantité du diluant hydrocarboné mise en oeuvre doit être suffisante pour y permettre une dissolution complète de l'agent ionisant. La quantité du diluant hydrocarboné dépend dès lors de sa nature, de la nature de l'agent ionisant et de la température à laquelle la deuxième étape du procédé selon l'invention est effectuée.

Dans une variante de cette deuxième forme d'exécution, l'agent ionisant est mis en oeuvre sous forme d'une solution. A cet effet on le dissout au préalable dans un hydrocarbure aromatique tel que le toluène ou dans un hydrocarbure aliphatique halogéné tel que le chlorure de méthylène et le chloroforme. Dans cette variante le choix du diluant hydrocarboné utilisé lors de la première étape du procédé suivant l'invention ne dépend pas de la nature de l'agent ionisant. Par conséquent, le diluant hydrocarboné peut être choisi parmi les hydrocarbures aromatiques et aliphatiques cités plus haut.

Dans le procédé selon l'invention, le métallocène neutre est déposé sur un support minéral. A cet effet, on imprègne le support, éventuellement activé au: préalable par tout moyen connu, avec une solution du métallocène neutre. La solution peut être préparée comme dans la variante de la première forme d'exécution du procédé selon l'invention, explicitée plus haut. On peut citer comme exemples de support minéral, les oxydes minéraux tels que les oxydes de silicium, d'aluminium, de titane, de zirconium, de thorium (éventuellement traités avec un composé fluoré), leurs mélanges et les oxydes mixtes de ces métaux tels que le silicate d'aluminium et le phosphate d'aluminium, et les halogénures minéraux tels que le chlorure de magnésium. La silice, l'alumine et le chlorure de magnésium sont préférés. La température opératoire de l'imprégnation peut varier de la température ambiante à la température d'ébullition de la solution du métallocène neutre et la durée de l'imprégnation peut varier de quelques minutes à plusieurs heures. Dans cette forme d'exécution du procédé selon l'invention, le support imprégné du métallocène neutre est recueilli de la solution, puis dispersé dans le diluant hydrocarboné et mélangé au composé organoaluminique au cours de la première étape explicitée plus haut.

Dans une variante de cette forme d'exécution du procédé selon l'invention, le support est traité avec une solution d'aluminoxane. L'aluminoxane peut être choisi parmi les composés linéaires de formule : 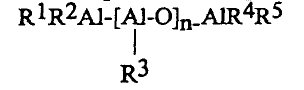 et les composés cycliques de formule : 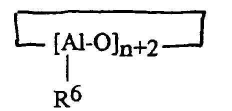 dans lesquelles R¹, R², R³, R⁴, R⁵ et R⁶ représentent chacun un groupe alkyle contenant jusqu'à 18 atomes de carbone, de préférence jusqu'à 12 atomes de carbone et 2 ≤ n ≤ 50. On utilise de préférence le méthylaluminoxane. L'aluminoxane est mis en solution dans un solvant organique choisi parmi les hydrocarbures aliphatiques tels que les alcanes linéaires, les alcanes ramifiés et les cycloalcanes, parmi les hydrocarbures aromatiques monocycliques tels que le benzène et ses dérivés par exemple le toluène, parmi les hydrocarbures aromatiques polycycliques dans lesquels chaque cycle peut être substitué et parmi leurs mélanges. Les solvants organiques préférés sont les hydrocarbures aromatiques. Le toluène convient particulièrement bien. La température opératoire du traitement avec la solution d'aluminoxane peut varier de la température ambiante à la température d'ébullition du solvant organique et la durée de l'imprégnation peut varier de quelques minutes à plusieurs heures, par exemple 5 minutes à 6 heures. Dans cette variante, l'imprégnation du support minéral avec la solution du métallocène neutre peut être exécutée avant ou après avoir traité le support minéral avec la solution d'aluminoxane. On préfère traiter le support minéral avec la solution d'aluminoxane avant de l'imprégner avec la solution du métallocène neutre.

Dans une autre forme d'exécution du procédé selon l'invention, l'agent ionisant est déposé sur un support. A cet effet, on imprègne le support, éventuellement activé au préalable par tout moyen connu, avec une solution de l'agent ionisant. La solution peut être préparée comme dans la variante de la deuxième forme d'exécution du procédé selon l'invention, explicitée plus haut. Le support peut être un polymère ou un support minéral, et dans ce dernier cas, est conforme à celui utilisé comme support du métallocène neutre explicité ci-dessus. Les conditions opératoires de l'imprégnation sont conformes à celles décrites dans le cadre du dépôt du métallocène neutre sur le support.

Le procédé selon l'invention permet d'obtenir des systèmes catalytiques ioniques au départ de métallocènes supportés et présente la particularité avantageuse d'éviter l'emploi de métallocènes polyméthylés non halogénés, instables et d'éliminer en outre la synthèse laborieuse de ces métallocènes.

Les systèmes catalytiques obtenus au moyen du procédé selon l'invention peuvent être utilisés pour l'homopolymérisation et la copolymérisation d'oléfines contenant jusqu'à 20 atomes de carbone par molécule. Les oléfines contiennent avantageusement de 2 à 12 atomes de carbone par molécule et sont par exemple choisies parmi l'éthylène, le propylène, le 1-butène, le 1-pentène, le 3-méthyl-1-butène, le 1-hexène, les 3- et 4-méthyl-1-pentènes, le 1-octène, le 3-éthyl-1-butène, le 1-heptène, le 3,4-diméthyl-1-hexène, le 4-butyl-1-octène, le 5-éthyl-1-décène et le 3,3-diméthyl-1-butène et les monomères vinyliques tels que le styrène et le chlorure de vinyle. Les systèmes catalytiques selon l'invention trouvent une utilisation particulière dans la production d'homopolymères de l'éthylène et du propylène, ou de copolymères de l'éthylène et du propylène entre eux et/ou avec un ou plusieurs comonomères oléfiniquement insaturés et pouvant comprendre jusqu'à 8 atomes de carbone, par exemple le 1-butène, le 1-pentène, le 3-méthyl-1-butène, le 1-hexène, les 3-et 4-méthyl-1-pentènes et le 1-octène. Une ou plusieurs dioléfines comprenant de 4 à 18 atomes de carbone peuvent également être copolymérisées avec l'éthylène et le propylène. De préférence, les dioléfines sont choisies parmi les dioléfines aliphatiques non conjuguées telles que le 4-vinylcyclohexène et le 1,5-hexadiène, les dioléfines alicycliques ayant un pont endocyclique telles que le dicyclopentadiène, le méthylène- et l'éthylidène-norbornène et les dioléfines aliphatiques conjuguées telles que le 1,3-butadiène, l'isoprène et le 1,3-pentadiène.

Les systèmes catalytiques obtenus au moyen du procédé selon l'invention apparaissent particulièrement performants pour la fabrication d'homopolymères de l'éthylène et du propylène et de copolymères de l'éthylène ou du propylène contenant au moins 90 %, de préférence au moins 95 %, en poids d'éthylène ou de propylène. Les comonomères préférés de l'éthylène sont le propylène, le 1-butène, le 1 -hexène, le 1-octène et le 1,5-hexadiène et ceux du propylène sont l'éthylène, le 1,3-butadiène, le 1,5-hexadiène.

L'invention concerne également un procédé de (co)polymérisation d'au moins une oléfine en présence d'un système catalytique comprenant au moins un composé organoaluminique de formule générale AlTT'T", dans laquelle T, T' et T" désignent chacun un radical hydrocarboné pouvant éventuellement comprendre de l'oxygène, au moins un métallocène neutre dérivé d'un métal de transition et au moins un agent ionisant; selon l'invention, le métallocène neutre est sélectionné parmi les composés de formule (Cₚ)a(Cₚ')_{b}MXₓ, dans laquelle :
- Cₚ désigne un radical cyclopentadiényle, indényle ou fluorényle ou un dérivé substitué de ce radical,
- Cₚ' désigne un radical cyclopentadiényle, indényle ou fluorényle ou un dérivé substitué de ce radical,
ou un radical dérivé d'un élément choisi parmi les groupes VA et VIA du tableau périodique, les groupes Cₚ et Cₚ' pouvant être liés par un pont covalent,
- M désigne un métal de transition choisi parmi les groupes IIIB, IVB, VB et VIB du tableau périodique
- a, b, et x désignent des nombres entiers tels que
   (a + b + x) = m, x ≥ 1, a et/ou b ≠ 0
- m désigne la valence du métal de transition M
- X désigne un halogène, le métallocène neutre étant déposé sur un support minéral
et on prépare un mélange du composé organoaluminique et du métallocène neutre dans au moins un diluant hydrocarboné, on met l'oléfine en contact avec ce mélange et on y ajoute l'agent ionisant.

Dans le procédé de (co)polymérisalion selon l'invention, le composé organoaluminique, le métallocène neutre, l'agent ionisant et le diluant hydrocarboné sont conformes à ceux utilisés dans le procédé de préparation du système catalytique explicité plus haut. On utilisé de préférence l'isobutane ou l'hexane comme diluant hydrocarboné. L'isobutane convient particulièrement bien.

Dans le procédé de (co)polymérisation selon l'invention, l'oléfine est conforme à celle définie plus haut, qui est polymérisable en présence des systèmes catalytiques obtenus au moyen du procédé selon l'invention.

Dans le procédé de (co)polymérisation selon l'invention, la préparation du mélange du composé organoaluminique et du métallocène neutre et l'ajout de l'agent ionisant sont réalisés respectivement comme dans la première et la deuxième étape du procédé de préparation du système catalytique précitées et sont caractérisés en ce qu'on les effectue dans le réacteur de polymérisation.

Dans une forme d'exécution particulière du procédé de (co)polymérisation suivant l'invention, le métallocène neutre est déposé sur un support. A cet effet, on imprègne le support avec une solution du métallocène neutre comme décrit dans le procédé de préparation selon l'invention. Le support est un support minéral conforme à celui utilisé dans ce procédé.

Dans le procédé de (co)polymérisation suivant l'invention, la polymérisation peut être effectuée indifféremment en solution, en suspension ou en phase gazeuse et peut être réalisée en continu ou en discontinu, par exemple en effectuant une prépolymérisation en suspension dans un premier réacteur suivie d'une polymérisation en phase gazeuse dans un second réacteur. Dans la (co)polymérisation on peut éventuellement mettre en oeuvre un régulateur du poids moléculaire tel que l'hydrogène.

Dans le cas d'une (co)polymérisation en suspension, celle-ci est effectuée dans le diluant hydrocarboné utilisé dans la préparation du mélange du métallocène neutre et du composé organoaluminique et à une température telle qu'au moins 50 % (de préférence au moins 70 %) du (co)polymère formé y soit insoluble. La température est généralement au moins égale à 20 °C, de préférence au moins 50 °C; elle est habituellement au maximum égale à 200 °C, de préférence au maximum 100 °C. La pression partielle d'oléfine est le plus souvent au moins égale à la pression atmosphérique, de préférence ≥ 0,4 MPa, par exemple ≥ 0,6 MPa; cette pression est en général au maximum égale à 5 MPa, de préférence ≤ 2 MPa, par exemple ≤ 1,5 MPa.

Dans le cas d'une (co)polymérisation en solution, celle-ci peut être réalisée dans le diluant hydrocarboné cité ci-dessus. La température opératoire dépend du diluant hydrocarboné utilisé et doit être supérieure à la température de dissolution du (co)polymère dans celui-ci, de sorte qu'au moins 50 % (de préférence au moins 70 %) du (co)polymère y soit dissous. Par ailleurs la température doit être suffisamment basse pour empêcher une dégradation thermique du (co)polymère et/ou du système catalytique. En général, la température optimale est de 100 à 200 °C. La pression partielle d'oléfine est le plus souvent au moins égale à la pression atmosphérique, de préférence ≥ 0,4 MPa, par exemple ≥ 0,6 MPa; cette pression est en général au maximum égale à 5 MPa, de préférence ≤ 2 MPa, par exemple ≤ 1,5 MPa. En variante, la (co)polymérisation est effectuée en utilisant l'oléfine elle-même comme diluant hydrocarboné. Dans cette variante on peut utiliser une oléfine liquide dans les conditions normales de pression et de température, ou opérer sous une pression suffisante pour qu'une oléfine normalement gazeuse soit liquéfiée.

Dans le cas où la (co)polymérisation est effectuée en phase gazeuse, on met un courant gazeux comprenant l'oléfine en contact avec le système catalytique dans un lit fluidisé. Dès lors le débit du courant gazeux doit être suffisant pour maintenir le (co)polymère en fluidisation et dépend de la vitesse de formation de celui-ci et de la vitesse à laquelle le système catalytique est consommé. La pression partielle de l'oléfine peut être inférieure ou supérieure à la pression atmosphérique, la pression partielle préférée variant de la pression atmosphérique à environ 7 MPa. En général, une pression de 0,2 à 5 MPa convient bien. Le choix de la température n'est pas critique, celle-ci est en général de 30 à 200 °C. On peut éventuellement utiliser un gaz de dilution, qui doit être inerte vis-à-vis du (co)polymère.

Une forme d'exécution particulière du procédé selon l'invention consiste à copolymériser au moins deux oléfines introduites simultanément ou en différé dans le réacteur de polymérisation, les deux oléfines étant de préférence introduites avant l'ajout de l'agent ionisant.

Le procédé de (co)polymérisation selon l'invention est particulièrement performant pour la fabrication d'homopolymères de l'éthylène et du propylène et de (co)polymères de l'éthylène et/ou du propylène.

Le procédé de (co)polymérisation présente également la particularité avantageuse d'augmenter l'activité de catalyseurs du type métallocène déposé sur un support à base d'aluminoxane en traitant celui-ci avec un agent ionisant.

Le procédé de (co)polymérisation suivant l'invention permet l'obtention de (co)polymères présentant une teneur faible en impuretés métalliques provenant du système catalytique et une fraction faible en oligomères. En outre, le procédé de (co)polymérisation permet d'obtenir des (co)polymères présentant une large distribution en poids moléculaire.

L'invention concerne dès lors aussi des (co)polymères d'au moins une oléfine, présentant une teneur en oligomères au maximum égale à 0,5 % (généralement inférieure à 0, 1 %) de son poids, une distribution de poids moléculaire ayant un rapport M_{w}/Mₙ de 2 à 10 et une teneur en métal de transition inférieure à 5 ppm en poids (généralement à 3 ppm), M_{w} et Mₙ désignant respectivement le poids moléculaire moyen en poids et le poids moléculaire moyen en nombre du (co)polymère produit. L'invention concerne en particulier des (co)polymères dérivés de l'éthylène et du propylène, notamment du polyéthylène et du polypropylène.

Les exemples dont la description suit, servent à illustrer l'invention. L'exemple 1 est donné à titre de comparaison et décrit la fabrication d'un système catalytique au moyen du procédé décrit dans le document EP-426638 et l'utilisation de celui-ci dans la polymérisation de l'éthylène.

La signification des symboles utilisés dans ces exemples, les unités exprimant les grandeurs mentionnées et les méthodes de mesure de ces grandeurs sont explicitées ci-dessous.
- HLMI =: indice de fluidité exprimé en fondu, mesuré sous une charge de 21,6 kg à 190 °C et exprimé en g/10 min suivant la norme ASTM D 1238.
- FO =: fraction en oligomères exprimée en gramme d'oligomères par kilo de (co)polymère et mesurée par extraction à l'hexane à sa température d'ébullition.
- <M> =: teneur en métal de transition M exprimée en ppm en poids et mesurée par fluorescence X.

### Exemple 1 (donné à titre de comparaison) : homopolymérisation de l'éthylène en présence d'un métallocène de zirconium

Dans cet exemple, non conforme à l'invention, on a interverti l'ordre d'introduction de l'agent ionisant et du composé organoaluminique dans le réacteur.

On a préparé un mélange à température ambiante de 8 ml d'une solution de 0,098 mmol d'éthylènebis(indényl)dichlorozirconium dans 50 ml de toluène et de 8 ml d'une solution de 0,0048 mmol de tétrakis(pentafluorophényl)borate de triphénylcarbénium dans 25 ml de toluène. Après 5 minutes on a introduit 1 ml de ce mélange dans un réacteur de trois litres que l'on a au préalable
a) alimenté d'un 1 d'hexane et d'un ml d'une solution de 40 g/l de triéthylaluminium,
b) chauffé à 40 °C et
c) alimenté en éthylène à une pression partielle de 1 MPa.

La pression d'éthylène et la température ont été maintenues constantes pendant la durée de la polymérisation. Après 45 minutes, le réacteur a été refroidi et dégazé. 42 g de polyéthylène ont été recueillis. Ensuite, les mêmes opérations ont été répétées avec la modification suivante : on a attendu 4 heures et 20 minutes au lieu de 5 minutes avant d'introduire le mélange métallocène de zirconium-agent ionisant dans le réacteur. Après 45 minutes de polymérisation, on a recueilli à peine 2 g de polyéthylène.

Une comparaison des résultats de l'exemple 1 avec ceux de l'exemple suivant fait apparaître le progrès apporté par l'invention pour ce qui concerne la productivité du procédé de polymérisation.

### Exemple 2 (conforme à l'invention) : homopolymérisation de l'éthylène en présence d'un métallocène de zirconium supporté

### (a) Activation du support :

On a calciné 3,36 g de silice à 815 °C pendant 16 heures sous air sec et pendant 4 heures sous azote. On a mis la silice activée en suspension dans 80 ml d'hexane que l'on a ensuite traitée avec 4 ml de triisobutylaluminium pendant 2 heures à 50 °C et pendant 10 heures à la température ambiante. Après évaporation de l'hexane, le solide obtenu a été séché sous vide et ensuite mis en suspension dans 70 ml de toluène.

### (b) Imprégnation du support :

On a dissous 83,3 mg d'éthylènebis(indényl)dichlorozirconium dans 50 ml de toluène et on a ajouté la solution ainsi obtenue à la suspension obtenue en (a). Ce mélange a été agité pendant 5 heures à la température ambiante. Ensuite, après sédimentation du solide, on a écarté le liquide surnageant et lavé le solide avec du toluène et de l'hexane. Le solide obtenu présentait une teneur en zirconium de 0,08 % en poids.

### (c) Polymérisation de l'éthylène :

On a introduit dans un réacteur de trois litres et muni d'un agitateur, 57 mg du solide obtenu en (b) et 1 ml d'une solution de 40 g/l de triéthylaluminium. Ensuite, on y a ajouté 1 1 d'isobutane. La température a été amenée à 40 °C. Puis on a alimenté le réacteur en éthylène à une pression partielle de 1 MPa. On a injecté dans le réacteur 2,5 ml d'une solution de 0,0021 mmol de tétrakis(pentafluorophényl)borate de triphénylcarbénium dans 10 ml de toluène. La pression d'éthylène et la température ont été maintenues constantes pendant la durée de la polymérisation. Après 60 minutes, le réacteur a été refroidi et dégazé. 82 g de polyéthylène ont été recueillis. Le polymère obtenu présentait les caractéristiques suivantes :
HLMI = 5,1
FO = 0,4
<Zr> < 3.

## Revendications

1. Procédé de préparation d'un système catalytique selon lequel on met en oeuvre au moins un composé organoaluminique de formule générale AlTT'T", dans laquelle T, T' et T" désignent chacun un radical hydrocarboné pouvant éventuellement comprendre de l'oxygène, au moins un métallocène neutre dérivé d'un métal de transition et au moins un agent ionisant, **caractérisé en ce qu'**on sélectionne le métallocène neutre parmi les composés de formule (Cₚ)ₐ(Cₚ')_{b}MXₓ, dans laquelle :
- Cₚ désigne un radical radical cyclopentadiényle, indényle ou fluorényle ou un dérivé substitué de ce radical,
- Cₚ' désigne un radical cyclopentadiényle, indényle ou fluorényle ou un dérivé substitué de ce radical,
ou un radical dérivé d'un élément choisi parmi les groupes VA et VIA du tableau périodique, les groupes Cₚ et Cₚ' pouvant être liés par un pont covalent
- M désigne un métal de transition choisi parmi les groupes IIIB, IVB, VB et VIB du tableau périodique
- a, b et x désignent des nombres entiers tels que (a + b + x) = m, x≥1 et a et/ou b≠0
- m désigne la valence du métal de transition M
- X désigne un halogène,
**caractérisé en outre en ce que** le métallocène neutre est déposé sur un support minéral et **en ce que**, dans une première étape, on prépare un mélange du composé organoaluminique et du métallocène neutre ainsi supporté dans au moins un diluant hydrocarboné et, dans une deuxième étape, on y ajoute l'agent ionisant.

2. Procédé selon la revendication 1, **caractérisé en ce que** le métal de transition est le zirconium.

3. Procédé selon la revendication 1 ou 2, **caractérisé en ce que** le composé organoaluminique, le métallocène neutre et l'agent ionisant sont mis en oeuvre en quantités telles que le rapport molaire de l'agent ionisant au métallocène neutre soit de 0,1 à 10 et le rapport molaire du composé organoaluminique au métallocène neutre soit au moins égal à 10.

4. Procédé selon l'une quelconque des revendications 1 à 3, **caractérisé en ce que** l'agent ionisant est sélectionné parmi le tétrakis(pentafluorophényl)-borate de triphénylcarbénium et le tri(pentafluorophényl)bore.

5. Procédé selon l'une quelconque des revendications 1 à 4, **caractérisé en ce que** le composé organoaluminique est choisi parmi le triéthylaluminium et le triisobutylaluminium.

6. Procédé selon l'une quelconque des revendications 1 à 5, **caractérisé en ce que** le support est traité avec une solution d'aluminoxane.

7. Procédé selon l'une quelconque des revendications 1 à 6, **caractérisé en ce que** le support est sélectionné parmi la silice, l'alumine et le chlorure de magnésium.

8. Procédé de (co)polymérisation d'au moins une oléfine en présence d'un système catalytique comprenant au moins un composé organoaluminique de formule générale AlTT'T", dans laquelle T, T' et T" désignent chacun un radical hydrocarboné pouvant éventuellement comprendre de l'oxygène, au moins un métallocène neutre dérivé d'un métal de transition et au moins un agent ionisant, **caractérisé en ce qu'**on sélectionne le métallocène neutre parmi les composés de formule (Cₚ)ₐ(Cₚ')_{b}MXₓ, dans laquelle :
- Cₚ désigne un radical cyclopentadiényle, indényle ou fluorényle ou un dérivé substitué de ce radical,
- Cₚ' désigne un radical cyclopentadiényle, indényle ou fluorényle ou un dérivé substitué de ce radical,
ou un radical dérivé d'un élément choisi parmi les groupes VA et VIA du tableau périodique, les groupes Cₚ et Cₚ' pouvant être liés par un pont covalent
- M désigne un métal de transition choisi parmi les groupes IIIB, IVB, VB et VIB du tableau périodique
- a, b et x désignent des nombres entiers tels que
(a + b + x) = m, x≥1 et a et/ou b≠0
- m désigne la valence du métal de transition M
- X désigne e un halogène,
et **en ce que** le métallocène neutre est disposé sur un support minéral et **en ce qu'**on prépare un mélange du composé organoaluminique et du métallocène neutre ainsi supporté dans au moins un diluant hydrocarboné, on met l'oléfine en contact avec ce mélange et on y ajoute l'agent ionisant.

9. Procédé selon la revendication 8, **caractérisé en ce que** le diluant hydrocarboné est choisi parmi lés hydrocarbures aliphatiques.

10. Procédé selon la revendication 8 ou 9, **caractérisé en ce que** le composé organoaluminique et le métallocène neutre sont mis en oeuvre en quantités telles que le rapport molaire du composé organoaluminique au métallocène neutre soit au moins égal à 100.

11. Procédé selon l'une quelconque des revendications 8 à 10, **caractérisé en ce que** le support est traité avec une solution d'aluminoxane.

12. Procédé selon l'une quelconque des revendications 8 à 11, **caractérisé en ce que** le support est sélectionné parmi la silice, l'alumine et le chlorure de magnésium.

## Claims

1. Process for preparing a catalytic system according to which at least one organic aluminium compound is used with the general formula AlTT'T", in which T, T' and T" each denote a hydrocarbon radical that may optionally include oxygen, at least one neutral metallocene derived from a transition metal and at least one ionising agent, **characterised in that** the neutral metallocene is selected from compounds with the formula (Cₚ)ₐ(Cₚ')_{b}MXₓ, in which:
- Cₚ denotes a cyclopentadienyl, idenyl or fluorenyl radical or a substituted derivative of said radical,
- Cₚ' denotes a cyclopentadienyl, idenyl or fluorenyl radical, or a substituted derivative of said radical,
or a radical derived from an element chosen from the groups VA and VIA of the periodic table, the groups Cₚ and Cₚ' being able to be linked by a covalent bridge,
- M denotes a transition metal chosen from the groups IIIB, IVB, VB and VIB of the periodic table,
- a, b and x denote whole numbers such that (a + b + x) = m, x ≥ 1 and a and/or b ≠ 0
- m denotes the valency of the transition metal M and
- X denotes a halogen,
**characterised in** addition **in that** the neutral metallocene is deposited on a mineral support and **in that**, in a first stage, a mixture of the organic aluminium compound and the thus supported neutral metallocene in at least one hydrocarbon diluent is prepared and, in a second stage, the ionising agent is added.

2. Process according to claim 1, **characterised in that** the transition metal is zirconium.

3. Process according to claim 1 or 2, **characterised in that** the organic aluminium compound, the neutral metallocene and the ionising agent are used in quantities such that the molar ratio of the ionising agent to the neutral metallocene is from 0.1 to 10 and the molar ratio of the organic aluminium compound to the neutral metallocene is at least equal to 10.

4. Process according to any one of claims 1 to 3, **characterised in that** the ionising agent is selected from triphenylcarbenium tetrakis(pentafluorophenyl)-borate and tri(pentafluorophenyl)boron.

5. Process according to any one of claims 1 to 4, **characterised in that** the organic aluminium compound is selected from triethylaluminium and triisobutylaluminium.

6. Process according to any one of claims 1 to 5, **characterised in that** the support is treated with an aluminoxane solution.

7. Process according to any one of claims 1 to 6, **characterised in that** the support is selected from silica, alumina and magnesium chloride.

8. Process for the (co)polymerisation of at least one olefin in the presence of a catalytic system comprising at least one organic aluminium compound is used with the general formula A1TT'T", in which T, T' and T" each denote a hydrocarbon radical that may optionally include oxygen, at least one neutral metallocene derived from a transition metal and at least one ionising agent, **characterised in that** the neutral metallocene is selected from compounds with the formula (Cₚ)ₐ(Cₚ')_{b}MXₓ, in which:
- Cₚ denotes a cyclopentadienyl, idenyl or fluorenyl radical or a substituted derivative of said radical,
- Cₚ' denotes a cyclopentadienyl, idenyl or fluorenyl radical, or a substituted derivative of said radical,
or a radical derived from an element chosen from the groups VA and VIA of the periodic table, the groups Cₚ and Cₚ' being able to be linked by a covalent bridge,
- M denotes a transition metal chosen from the groups IIIB, IVB, VB and VIB of the periodic table,
- a, b and x denote whole numbers such that (a + b + x) = m, x ≥ 1 and a and/or b ≠ 0
- m denotes the valency of the transition metal M and
- X denotes a halogen,
and **in that** the neutral metallocene is deposited on a mineral support and **in that** a mixture of the organic aluminium compound and the thus supported neutral metallocene in at least one hydrocarbon diluent is prepared, the olefin is placed in contact with said mixture and the ionising agent is added.

9. Process according to claim 8, **characterised in that** the hydrocarbon diluent is chosen from aliphatic hydrocarbons.

10. Process according to claim 8 or 9, **characterised in that** the organic aluminium compound and the neutral metallocene are used in quantities such that the molar ratio of the organic aluminium compound to the neutral metallocene is at least equal to 100.

11. Process according to any one of claims 8 to 10, **characterised in that** the support is treated with an aluminoxane solution.

12. Process according to any one of claims 8 to 11, **characterised in that** the support is selected from silica, alumina and magnesium chloride.

## Patentansprüche

1. Verfahren zur Herstellung eines katalytischen Systems, gemäß dem man wenigstens eine aluminiumorganische Verbindung der allgemeinen Formel AlTT'T", worin T, T' und T" jeweils einen Kohlenwasserstoffrest, der gegebenenfalls Sauerstoff umfassen kann, bezeichnen, wenigstens ein neutrales Metallocen, das von einem Übergangsmetall abgeleitet ist, und wenigstens ein lonisierungsmittel einsetzt, **dadurch gekennzeichnet, dass** man das neutrale Metallocen auswählt unter den Verbindungen der Formel (Cₚ)ₐ(Cₚ')_{b}MXₓ, worin:
- Cₚ einen Cyclopentadienyl-, Indenyl- oder Fluorenylrest oder ein substituiertes Derivat dieses Restes bezeichnet,
- Cₚ' einen Cyclopentadienyl-, Indenyl- oder Fluorenylrest oder ein substituiertes Derivat dieses Restes bezeichnet,
oder einen Rest, der von einem Element abgeleitet ist, das ausgewählt ist unter den Gruppen VA und VIA des Periodensystems, wobei die Gruppen Cₚ und Cₚ' durch eine kovalente Brücke verbunden sein können
- M ein Übergangsmetall bezeichnet, das ausgewählt ist unter den Gruppen IIIB, IVB, VB und VIB des Periodensystems
- a, b und x ganze Zahlen bezeichnen, derart dass (a + b + x) = m, x ≥ 1 und a und/oder b ≠ 0
- m die Wertigkeit des Übergangsmetalls M bezeichnet
- X ein Halogen bezeichnet,
außerdem **dadurch gekennzeichnet, dass** das neutrale Metallocen auf einem mineralischen Träger abgeschieden ist, und dadurch, dass man in einem ersten Schritt ein Gemisch der aluminiumorganischen Verbindung und des so trägergebundenen neutralen Metallocens in wenigstens einem Kohlenwasserstoffverdünnungsmittel herstellt und man in einem zweiten Schritt dazu das lonisierungsmittel hinzufügt.

2. Verfahren gemäß Anspruch 1, **dadurch gekennzeichnet, dass** das Übergangsmetall Zirkonium ist.

3. Verfahren gemäß Anspruch 1 oder 2, **dadurch gekennzeichnet, dass** die aluminiumorganische Verbindung, das neutrale Metallocen und das lonisierungsmittel in solchen Mengen eingesetzt werden, dass das Molverhältnis des Ionisierungsmittels zu dem neutralen Metallocen 0,1 bis 10 ist und das Molverhältnis der aluminiumorganischen Verbindung zu dem neutralen Metallocen wenigstens gleich 10 ist.

4. Verfahren gemäß einem der Ansprüche 1 bis 3, **dadurch gekennzeichnet, dass** das lonisierungsmittel unter Triphenylcarbenium-tetrakis(pentafluorphenyl)borat und Tri(pentafluorphenyl)bor ausgewählt ist.

5. Verfahren gemäß einem der Ansprüche 1 bis 4, **dadurch gekennzeichnet, dass** die aluminiumorganische Verbindung unter Triethylaluminium und Triisobutylaluminium ausgewählt ist.

6. Verfahren gemäß einem der Ansprüche 1 bis 5, **dadurch gekennzeichnet, dass** der Träger mit einer Aluminoxanlösung behandelt wird.

7. Verfahren gemäß einem der Ansprüche 1 bis 6, **dadurch gekennzeichnet, dass** der Träger unter Siliciumdioxid, Aluminiumoxid und Magnesiumchlorid ausgewählt ist.

8. Verfahren zur (Co)polymerisation von wenigstens einem Olefin in Gegenwart eines katalytischen Systems, das wenigstens eine aluminiumorganische Verbindung der allgemeinen Formel AlTT'T", worin T, T' und T" jeweils einen Kohlenwasserstoffrest, der gegebenenfalls Sauerstoff umfassen kann, bezeichnen, wenigstens ein neutrales Metallocen, das von einem Übergangsmetall abgeleitet ist, und wenigstens ein lonisierungsmittel umfasst, **dadurch gekennzeichnet, dass** man das neutrale Metallocen auswählt unter den Verbindungen der Formel (Cₚ)ₐ(Cₚ')_{b}MX_{x.} worin:
- Cₚ einen Cyclopentadienyl-, Indenyl- oder Fluorenylrest oder ein substituiertes Derivat dieses Restes bezeichnet,
- Cₚ' einen Cyclopentadienyl-, Indenyl- oder Fluorenylrest oder ein substituiertes Derivat dieses Restes bezeichnet, oder einen Rest, der von einem Element abgeleitet ist, das ausgewählt ist unter den Gruppen VA und VIA des Periodensystems, wobei die Gruppen Cₚ und Cₚ' durch eine kovalente Brücke verbunden sein können
- M ein Übergangsmetall bezeichnet, das ausgewählt ist unter den Gruppen IIIB, IVB, VB und VIB des Periodensystems
- a, b und x ganze Zahlen bezeichnen, derart dass
(a + b + x) = m, x ≥ 1 und a und/oder b ≠ 0
- m die Wertigkeit des Übergangsmetalls M bezeichnet
- X ein Halogen bezeichnet,
und dadurch, dass das neutrale Metallocen auf einem mineralischen Träger abgeschieden ist, und dadurch, dass man ein Gemisch der aluminiumorganischen Verbindung und des so trägergebundenen neutralen Metallocens in wenigstens einem Kohlenwasserstoffverdünnungsmittel herstellt, man das Olefin mit diesem Gemisch in Kontakt bringt und man dazu das lonisierungsmittel hinzufügt.

9. Verfahren gemäß Anspruch 8, **dadurch gekennzeichnet, dass** das Kohlenwasserstoffverdünnungsmittel unter den aliphatischen Kohlenwasserstoffen ausgewählt ist.

10. Verfahren gemäß Anspruch 8 oder 9, **dadurch gekennzeichnet, dass** die aluminiumorganische Verbindung und das neutrale Metallocen in solchen Mengen eingesetzt werden, dass das Molverhältnis der aluminiumorganischen Verbindung zu dem neutralen Metallocen wenigstens gleich 100 ist.

11. Verfahren gemäß einem der Ansprüche 8 bis 10, **dadurch gekennzeichnet, dass** der Träger mit einer Aluminoxanlösung behandelt wird.

12. Verfahren gemäß einem der Ansprüche 8 bis 11, **dadurch gekennzeichnet, dass** der Träger unter Siliciumdioxid, Aluminiumoxid und Magnesiumchlorid ausgewählt ist.
